# EUROPÄISCHE PATENTSCHRIFT

(11) **EP 1 286 071 B1**
(45) Veröffentlichungstag und Bekanntmachung des Hinweises auf die Patenterteilung: **28.01.2004**
(21) Anmeldenummer: 02017435.5
(22) Anmeldetag: 03.08.2002
(51) Int. Cl.: F16D 3/205

(54) **Tripodegelenk**
Tripod joint
Joint tripode

(30) Priorität: 23.08.2001 DE 10141440
(43) Veröffentlichungstag der Anmeldung: 26.02.2003
(73) Patentinhaber: DaimlerChrysler AG, 70567 Stuttgart (DE)
(72) Erfinder: Henkel, Jürgen, 71394 Kernen (DE); Kollmann, Andreas, 72178 Waldachtal (DE); Münich, Peter, 70736 Fellbach (DE); Neuwirth, Birgit, 71384 Weinstadt (DE); Schröder, Rolf, 70619 Stuttgart (DE); Weniger, Stefan, 73642 Welzheim (DE); Wörner, Günter, 71394 Kernen (DE)

(56) Entgegenhaltungen:
- US-A- 4 708 693
- PATENT ABSTRACTS OF JAPAN vol. 1999, no. 08, 30. Juni 1999 (1999-06-30) & JP 11 082532 A (HONDA MOTOR CO LTD), 26. März 1999 (1999-03-26)

## Beschreibung

Die Erfindung betrifft ein Tripodegelenk gemäß dem Oberbegriff des Patentanspruchs 1. Ein solches Tripodgelenk ist aus US-A-4 708 693 bekannt.

Tripodegelenke finden beispielsweise Einsatz als Seitenwellen von Kraftfahrzeugen. Hierbei dienen die Tripodegelenke zur Übertragung von Antriebsmomenten zwischen zwei Antriebselementen eines Antriebsstranges. Mittels der Tripodegelenke ist der Ausgleich einer relativen Verschiebung sowie einer relativen Verschwenkung der Antriebselemente ermöglicht. Für den Einsatz bei Seitenwellen eines Kraftfahrzeuges sind derartige Relativbewegungen durch Einfederungen der Fahrzeugräder bedingt.

Bekannte Tripodegelenke verfügen über ein Gelenkaußenteil und ein in diesem aufgenommenes Gelenkinnenteil. In den Kraftfluß zwischen Gelenkaußenteil und Gelenkinnenteil sind Wälzkörper zwischengeschaltet. Unter Gewährleistung der Übertragung eines Antriebsmomentes ist das Gelenkaußenteil gegenüber dem Gelenkinnenteil unter wälzender Bewegung der Wälzkörper axial verschieblich und/oder verschwenkbar um eine Achse quer zu der mit den Längsachsen des Gelenkaußenteiles sowie des Gelenkinnenteiles aufgespannten Ebene. Einsatz finden zylinderförmige Wälzkörper, welche infolge des mit den benachbarten Bauteilen ausgebildeten Linienkontaktes zur Übertragung großer Antriebsmomente vorteilhaft gegenüber kugelförmigen Wälzkörpern sind.

Von Nachteil kann bei derart ausgebildeten Bauteilen sein, dass es bei räumlichen Bewegungen eines Tripodegelenkes zu mechanischen Beeinträchtigungen der Übertragungsfunktion kommen kann, was schlimmstenfalls zur Schwingungs- und/oder Geräuschanregung des Antriebsstranges und zu hieraus resultierenden Komfortbeeinträchtigungen führen kann.

Der Erfindung liegt somit die Aufgabe zugrunde, ein hinsichtlich der mechanischen Übertragungseigenschaften verbessertes Tripodegelenk vorzuschlagen.

Ein Vorschlag zur Lösung der der Erfindung zugrundeliegenden Aufgabe ist gekennzeichnet durch die Merkmale des Patentanspruchs 1. Längsachsen von benachbarten Wälzkörpern sind unter einem spitzen Winkel zueinander orientiert.

Die der Erfindung zugrundeliegenden Untersuchungen haben gezeigt, dass sich für zylinderförmige Wälzkörper bei einer axialen, translatorischen Verschiebung des Gelenkinnenteiles gegenüber dem Gelenkaußenteil eine reine Rollbewegung der Wälzkörper mit optimierten Reibungsbedingungen ergibt. Bei einer in der Praxis mit rotierenden Antriebselementen unvermeidlichen (zusätzlichen) Verschwenkung der Gelenkteile ergibt sich eine kinematisch notwendige zweidimensionale Bewegung des Zapfens gegenüber dem Gelenkaußenteil. Hierdurch entsteht eine Bewegungskomponente in Längsrichtung der Wälzkörper, welche nur durch eine Gleitbewegung der Wälzkörper gegenüber den benachbarten Bauteilen ausgeglichen werden kann. Diese Gleitbewegungen rufen (Gleit-)Reibkräfte hervor, welche die Ursache der unerwünschten mechanischen Beeinträchtigungen darstellen. Die Reibkräfte bilden nichtlineare Kräfte und führen insbesondere zu einer Schwingungsanregung dritter Ordnung. Durch die erfindungsgemäße Orientierung der Längsachsen benachbarter Wälzkörper zueinander verfügen die Wälzkörper über unterschiedliche bevorzugte Rollrichtungen, wodurch die Gleitanteile nicht zwingend an allen Wälzkörpern, sondern minimiert, nur für einzelne Wälzkörper oder für besondere räumliche Bewegungsformen überhaupt nicht auftreten. Der verminderte Gleitanteil wirkt sich neben der Vermeidung der vorgenannten Nachteile positiv auf den Verschleiß oder die Lebensdauer des Gelenkes, der Wälzkörper oder der Laufbahnen der Wälzkörper aus. Bei einer geschickten kinematischen Auslegung der Übertragungselemente kann eine Selbstzentrierung von die Wälzkörper aufnehmenden Käfigen zu den Zapfen des Tripodegelenkes erzielt werden, wodurch Zentriervorrichtungen wie Federn etc. entfallen oder einfacher oder kostengünstiger aufgebaut werden können. Es ist kein Spiel der Bauteile in Umfangsrichtung erforderlich. Die Bauteile können sogar mit einer leichten Überdeckung verbaut werden. Durch die Spielfreiheit ergibt sich im Fahrzeug ein verbesserter Komfort, insbesondere bei Lastwechselvorgängen.

Nach einer bevorzugten Ausgestaltung der Erfindung verfügen die Längsachsen von mehreren einer Laufbahn zugeordneten Wälzkörpern über einen gemeinsamen Schnittpunkt. Für eine Verschwenkung des Gelenkinnenteiles um den gemeinsamen Schnittpunkt ergibt sich ein optimiertes Wälz- und Gleitverhalten des Tripodegelenkes, da sich sämtliche Wälzkörper auf einer Kreisbahn bewegen, für welche die reine Wälzbewegung der Wälzkörper tangential zur Kreisbahn orientiert sind, so dass keine Gleitbewegung auftritt. Für eine reine translatorische Bewegung, also eine reine axiale Verschiebung des Gelenkinnenteiles gegenüber dem Gelenkaußenteil, liegt der Schnittpunkt idealerweise im Unendlichen (R = ∞), während für eine reine Schwenkbewegung der Schnittpunkt idealerweise im Bereich des Mittelpunktes des Tripodesternes im Abstand R = R_{G} liegt. Für komplexe räumliche Bewegungsformen ist ein idealer Abstand 0 < R < ∞ zu bestimmen. Die Ermittlung des idealen Abstandes, aus welchem der zu wählende spitze Winkel zwischen benachbarten Längsachsen resultiert, erfolgt nach Maßgabe der gewählten Wälzkörper, der Bauteildimensionen, der zu übertragenden Kräfte sowie der im Betrieb auftretenden relativen Verschiebungen und Verschwenkungen. Beispielsweise kann hier ein typisches Bewegungsprofil zugrunde gelegt werden, auf dessen Basis die im Betrieb auftretenden Gleitbewegungen ermittelt und unter Variation des spitzen Winkels minimiert werden. Auf diese Weise können größere Gleitreibkräfte zu selten auftretenden Betriebsbereichen verschoben werden, während niedrigere Gleitreibkräfte bei häufig auftretenden Betriebsbereichen anzusiedeln sind.

Vorteilhafte Ausgestaltungen ergeben sich aus den Unteransprüchen und der Beschreibung.

Bevorzugte Ausführungsbeispiele des erfindungsgemäßen Tripodegelenkes werden nachfolgend anhand der Zeichnung näher erläutert. In der Zeichnung zeigen:
- Fig. 1: ein erfindungsgemäßes Tripodegelenk im Längsschnitt,
- Fig. 2: ein erfindungsgemäßes Tripodegelenk im Querschnitt,
- Fig. 3: einen erfindungsgemäßen Gelenkzapfen mit Druckstück, Laufkäfig, Wälzkörpern und Zentrierelementen im Schnitt A-A gemäß Fig. 2,
- Fig. 4: einen erfindungsgemäßen Laufkäfig mit Wälzkörpern,
- Fig. 5: einen erfindungsgemäßen Laufkäfig mit Wälzkörpern und einem gestrichelt dargestellten Druckstück,
- Fig. 6: einen erfindungsgemäßen Laufkäfig mit Wälzkörpern und einem gestrichelt dargestellten Druckstück,
- Fig. 7: einen erfindungsgemäßen Gelenkzapfen mit Druckstück, Laufkäfig, Wälzkörpern und Zentrierelementen im Schnitt A-A gemäß Fig. 2,
- Fig. 8: ein erfindungsgemäßes Tripodegelenk im Querschnitt.

Ein Tripodegelenk 10 verfügt über ein Gelenkinnenteil 11 sowie ein dieses aufnehmendes Gelenkaußenteil 12. Das Gelenkinnenteil 11 sowie das Gelenkaußenteil 12 sind jeweils zumindest drehfest mit einem Antriebselement eines Antriebsstrangs eines Kraftfahrzeuges verbunden, beispielsweise mit einer Antriebswelle und einem Fahrzeugrad. Das Tripodegelenk 10 dient einer Übertragung eines Antriebsmomentes zwischen dem Gelenkinnenteil 11 und dem Gelenkaußenteil 12 bei Gewährleistung einer relativen Verschiebung entlang der Längsachse 13-13 des Gelenkinnenteils 11 bzw. der Längsachse 14-14 des Gelenkaußenteils 12, einer relativen Verschwenkung des Gelenkinnenteils 11 gegenüber dem Gelenkaußenteil 12, welche mit einer Veränderung des Winkels 15 zwischen den Längsachsen 13-13 und 14-14 einhergeht, sowie einer räumlichen Bewegung, welche sich aus einer Überlagerung der vorgenannten Bewegungsformen ergibt.

Das Gelenkinnenteil 11 verfügt am innenliegenden Ende über drei ein- oder mehrstückig mit diesem ausgebildete, radial orientierte und jeweils unter 120° in Umfangsrichtung verteilte Zapfen 16, welche einen Tripodestern bilden. Die Zapfen 16 weisen jeweils einen teilkugelförmigen Kugelkörper 17 auf. Der Kugelkörper 17 liegt zur Übertragung von Kräften in beide Umfangsrichtungen jeweils im Bereich der kugelförmigen Mantelfläche an einer korrespondierend ausgebildeten Ausnehmung 18 eines Druckstückes 19 an. Auf der gegenüberliegenden, einer ebenen Gegenfläche 20 des Gelenkaußenteiles 12 zugewandten Seite des Druckstückes 19 ist dieses mit einer Lauffläche 21 eben ausgebildet. Die Gegenfläche 20 kann von einer größeren ebene Fläche gebildet sein oder aber in einer Bahn oder Nut 22 des Gelenkaußenteiles 12 vorgesehen sein. Die Lauffläche 21 und die Gegenfläche 20 sind parallel zueinander orientiert. Zwischen diesen sind zylinderförmige Wälzkörper 23, insbesondere Rollen oder Nadeln, unter Ausbildung eines Linienkontaktes aufgenommen. Mehrere Wälzkörper sind in einem Käfig 24 geführt. Zur Übertragung von Umfangskräften in die entgegengesetzte Richtung ist jeder Zapfen 16 mit den zugeordneten Druckstücken 19, den Wälzkörpern 23 und den Flächen 20, 21 symmetrisch zu einer die Längsachse 13-13 aufnehmenden Zapfenmittenebene ausgebildet.

Die Lauffläche 21 eines Druckstückes 19 hat vorzugsweise eine rechteckige Form, so dass möglichst viele Wälzkörper 23 bei Verringerung der Flächenpressung einen tragenden Kontakt ausbilden. Es sind jedoch auch kreisförmige oder ovale Druckstücke 19 möglich.

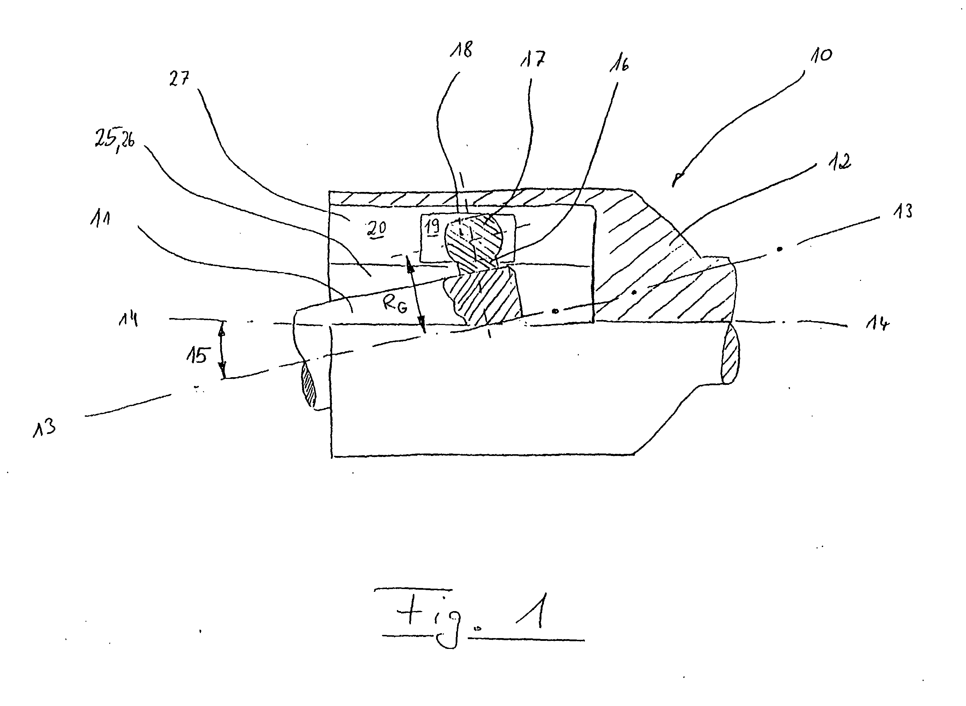

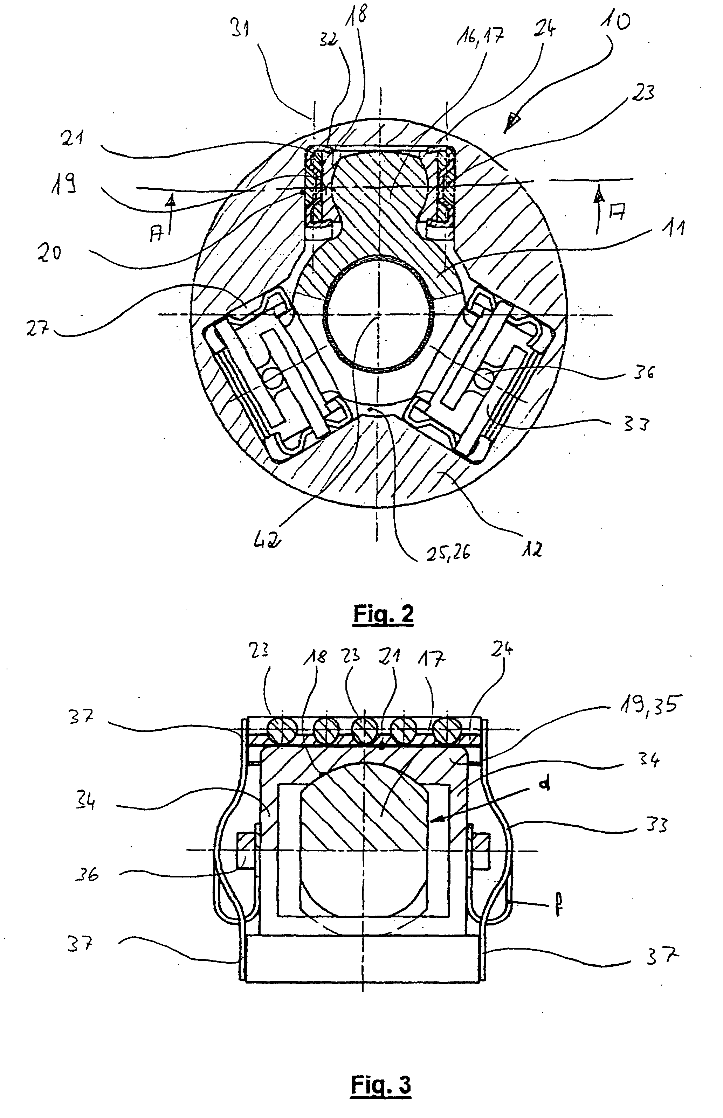

Das Gelenkaußenteil 12 verfügt über eine in Richtung der Längsachse 14-14 orientierte Ausnehmung 25 mit im wesentlichen kreisförmiger, mittiger Bohrung 26 sowie drei radial orientierten und jeweils unter 120° in Umfangsrichtung verteilten Aufnahmeräumen 27, die jeweils zur Aufnahme und Abstützung eines Zapfens 16, zweier Druckstücke 19 und von Wälzkörpern 23 dienen. Die Aufnahmeräume 27 verfügen in dem in Fig. 2 dargestellten Schnitt über eine im wesentlichen U-förmige, in Richtung der Bohrung 26 offene Kontur, wobei die Seitenschenkel der U-förmigen Kontur mit den Gegenflächen 20 gebildet sind. Im Ausführungsbeispiel gemäß Fig. 1 sind die Seitenschenkel geradlinig ausgebildet ohne Übergangsbereich zu den Gegenflächen 20. Eine zusätzliche oder alleinige Führung der Wälzkörper 23 und Käfige 24 durch das Gelenkaußenteil kann bei einer Einbringung von Nuten 28 in die Seitenschenkel erzielt werden, wobei die Gegenflächen 20 den Nutgrund bilden und die Käfige 24 durch die Seitenflächen der Nuten 28 in radialer Richtung geführt werden.

Je Zapfen 16 können zwei Druckstücke 19 und zwei Käfige 24 eingesetzt werden. Alternativ können die beiden Druckstücke 19 über Verbindungsbereiche zu einem Druckkörper 29 miteinander verbunden sein und/oder die beiden Käfige 24 als einstückiger Käfig 30 ausgebildet sein.

Gemäß Fig. 2 sind die Wälzkörper 23 in einem Käfig 24 geführt. In den Käfigen 24 sind die Wälzkörper 23 unter Gewährleistung der relativen Lage der Längsachsen 31 der Wälzkörper 23 zueinander geführt. Die Käfige 24 sind gegenüber dem Druckstück 19 in radialer Richtung über das Druckstück 19 umgreifende bzw. einschließende Schultern 32 geführt. Die Käfige 24 können über die Schultern 32 wie dargestellt auf das Druckstück 19 "geclipst" werden. Die Käfige 24 können weiterhin über Federelemente 33 in Laufrichtung der Wälzkörper 23 zentriert sein. Zwei Käfige 24 eines Zapfens 16 können über ein gemeinsames Federelement 33 geführt bzw. zentriert sein.

Entsprechend dem in Fig. 3 dargestellten Ausführungsbeispiel können die einem Kugelkörper 17 zugeordneten Druckstücke 19 über zwei Verbindungsstege 34 zu einem einstückig ausgebildeten Druckkörper 35 verbunden sein. Eine Einführung des Kugelkörpers 17 in den Druckkörper 35 kann durch eine an sich bekannte Ausführung als Bajonett-Verbindung gewährleistet sein.

Gemäß dem Ausführungsbeispiel nach Fig. 2, Fig. 3 sind zwei Federelemente 33 über jeweils ein Befestigungsmittel 36 mit dem Druckstück 19, dem Druckkörper 29 oder dem Kugelkörper 17 verbunden. Die Federelemente 33 verfügen jeweils über zwei elastische Finger 37, welche zur Abstützung der gegenüberliegender Käfige 30 an diesen anliegen oder mit diesen verbunden sind.

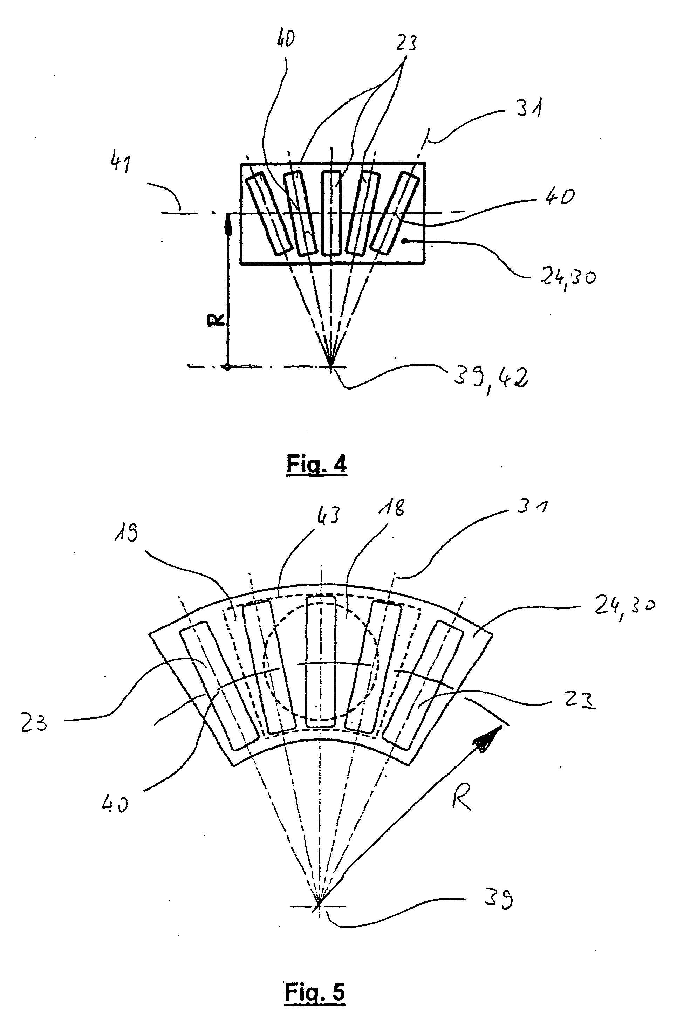

Gemäß Fig. 4 sind die Längsachsen 31 der zylinderförmigen Wälzkörper 23 in einem im wesentlichen rechteckförmigem Käfig 24, 30 unter einem spitzen Winkel 38 zueinander geneigt und schneiden sich in einem gemeinsamen Schnittpunkt 39. Die Längsmitten 40 der Wälzkörper 23 liegen auf einer Geraden 41, welche von dem Mittelpunkt 42 des Tripodensternes in einem Abstand R beabstandet ist.

Entsprechend Fig. 5 können die Längsmitten 40 auf einer Kreisbahn mit dem Radius R liegen, wobei in diesem Fall der Käfig 24, 30 kreissegmentförmig ausgebildet ist und insbesondere der Mittelpunkt der den Käfig 24, 30 begrenzendem Kreissegmente dem Schnittpunkt 39 entspricht. Gestrichelt dargestellt ist in Fig. 5 die Kontur 43 des Druckstückes 19, welches über eine kreissegmentförmige Außenkontur verfügt sowie auf der den Wälzkörpern gegenüberliegenden Seite über die teilkugelförmige Ausnehmung 18 zur Aufnahme des Kugelkörpers 17.

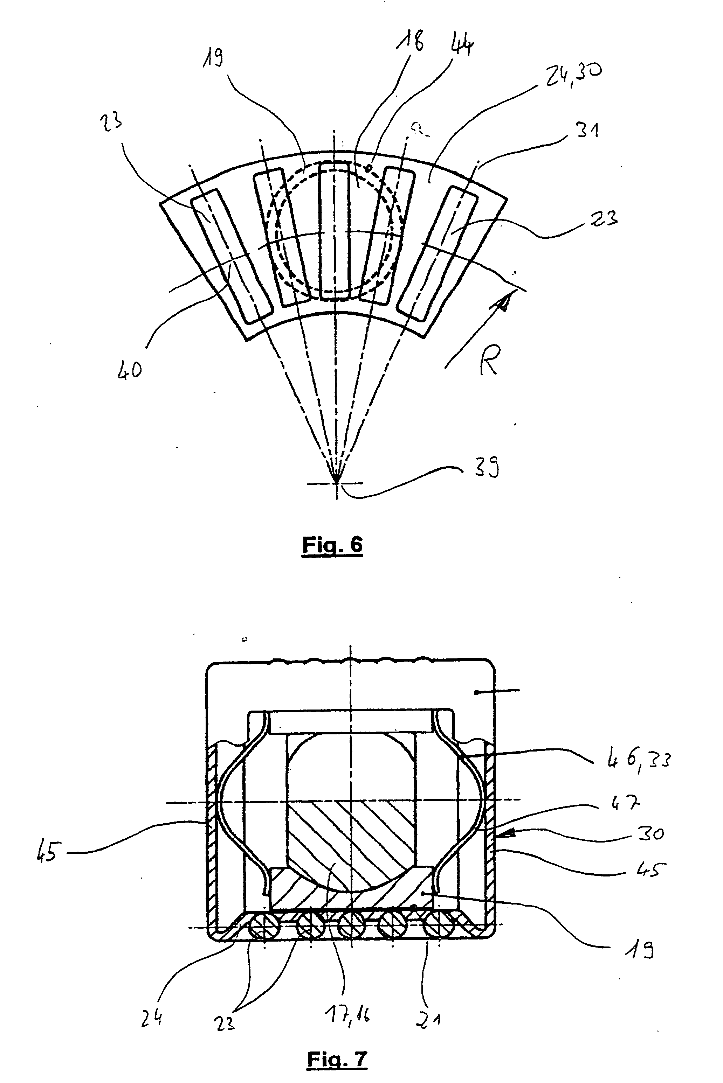

Abweichend hiervon kann entsprechend Fig. 6 - bei Ausbildung des Käfig 24, 30 und der Wälzkörper 23 entsprechend Fig. 5 - das Druckstück 19, 29 über eine konzentrisch zur Außenkontur der Ausnehmung 18 angeordnete, kreisförmige Außenkontur 44 verfügen.

Gemäß dem in Fig. 7 dargestellten Ausführungsbeispiel sind die auf den gegenüberliegenden Seiten des Kugelkörpers 17 angeordneten Käfige 24 über Verbindungsbereiche 45 zu einem einstückigen Käfig 30 miteinander verbunden. In diesem Fall ist eine Übereinstimmung der Position der Käfige 24 in Laufrichtung gewährleistet. Eine Zentrierung des Käfigs 30 gegenüber dem Druckstück 19, Druckkörper 29 oder dem Kugelkörper 17 kann über ein oder zwei vereinfacht ausgebildete Federelemente 33 erfolgen. In dem in Figur 7 dargestellten Ausführungsbeispiel sind in Laufrichtung auf beiden Seiten der Druckstücke 19 zwei Druckfedern 46 angeordnet. Die Druckfedern 46 sind als Blattfedern mit mittiger Ausbauchung 47 ausgebildet, deren Endbereiche an den Druckstücken 19 abgestützt sind und die im Bereich der Ausbauchung 47 an einem Verbindungsbereich 45 anliegen.

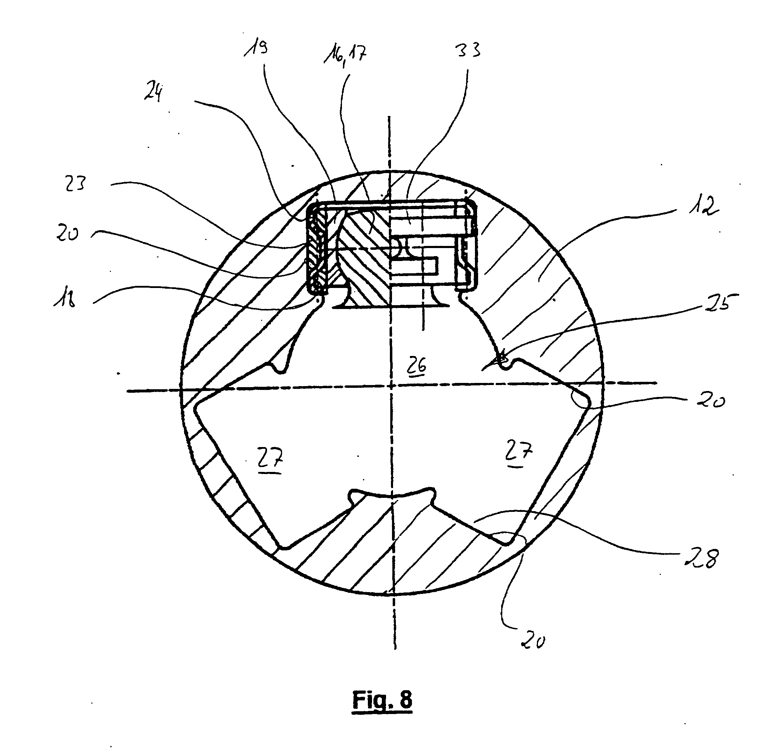

In dem in Figur 8 dargestellten Ausführungsbeispiel sind die Gegenflächen in Nuten 28 des Gelenkaußenteiles 12 gebildet. In diesen Nuten 28 sind die Wälzkörper 23 mit den Käfigen 24 in radialer Richtung geführt. In diesem Fall kann die radiale Führung der Käfige 24 gegenüber den Druckstücken 19 über die Schultern 32 gemäß Fig. 2 entfallen.

Die Schnittpunkte 39 der Längsachsen 31 jeweils benachbarter Wälzkörper 23 können in einem Punkt liegen, auf einer Kurve, einer Geraden oder einem Kreisbogen.

Die Käfige 24, 30 können gegenüber den Gegenflächen 20 rein translatorische Bewegungen ausführen. Gemäß dem in Fig. 8 dargestellten Ausführungsbeispiel sind die Käfige 24 in geradlinigen Nuten 28 des Gelenkaußenteiles 12 geführt. In diesem Fall entfallen die Schultern 32 der Käfige 24, so dass keine radiale Führung der Käfige 24 gegenüber dem Druckstück 19 gegeben ist und die Druckstücke 19 in radialer Richtung Relativbewegungen und Verschwenkungen gegenüber den Käfigen 24 ausführen können.

Im Ausführungsbeispiel gemäß Fig. 2 werden die Käfige 24 bei gleichbleibendem radialen Abstand mit dem Zapfen 16 verschwenkt. In diesem Fall führt der Käfig 24 gegenüber dem Gelenkaußenteil 12 keine geradlinige Bewegung aus, sondern eine bogenförmige Schwenkbewegung. Zu diesem Zweck sind in dem Gelenkaußenteil 12 angepaßte bogenförmige Nuten 28 oder aber - entsprechend Fig. 1 - nicht in Nuten angeordnete Gegenflächen 20 vorzusehen.

Die kinematischen Grenzen der Schwenkbewegung werden durch die Geometrie des Käfigs 24 und des Gelenkaußenteiles 12 gebildet. Im Betrieb des Tripodegelenkes 10 kann es in Grenzsituationen zu einem Steuerkontakt des Druckstückes 19 mit den Endanschlägen des Käfigs 24 oder auch zu einem radialen Kontakt von Käfig 24 und Gelenkaußenteil 12 kommen. Diese Kontakte wirken sich auf den Betriebskomfort nicht negativ aus, weil die Kräfte nur in Grenzsituationen stochastisch auftreten und deshalb nicht zu einer periodischen Anregung führen.

Die vorgenannten Führungen der Käfige 24 gegenüber dem Gelenkaußenteil 12 und den Druckstücken 19 können auch gänzlich entfallen oder elastisch ausgebildet sein. In diesem Fall ergibt sich eine undefinierte Bewegungsform des Käfigs 24 gegenüber den benachbarten Bauteilen, was zu einer Verschleißminimierung führen kann. Alternativ kann die Bewegung selbstzentrierend erfolgen, insbesondere durch die erfindungsgemäße Anordnung der Längsachsen 31 der Wälzkörper 23 unter einem spitzen Winkel 38, wobei sich die Rollbahn des Käfigs 24 auf der Gegenfläche 20 aufgrund der wirkenden äußeren und inneren Wälzkörperführungskräfte selbständig einstellt.

Ohne das der Erfindung zugrundeliegende Prinzip zu verlassen, ist es ebenfalls möglich, Gruppen von benachbarten oder nicht benachbarten Wälzkörpern 23 zu bilden, wobei Wälzkörper 23 einer Gruppe zueinander parallel orientierte Längsachsen 31 aufweisen und diese Längsachsen 31 zu den Längsachsen 31 der Wälzkörper 23 anderer Gruppen einen zweiten spitzen Winkel 38 bilden. Alternativ oder zusätzlich können die Längsachsen 31 benachbarter Wälzkörper 23 einer Gruppe unter einem ersten Winkel 38 zueinander geneigt sein, während die Wälzkörper 23 einer zweiten Gruppe unter einem zweiten Winkel 38 zueinander geneigt sind. Unterschiedliche Winkel 38 für benachbarte Längsachsen 31, beispielsweise von der Mitte des Käfigs 24 in die Laufrichtung ansteigende oder abfallende Winkel 38, sind ebenfalls möglich.

Die erfindungsgemäßen Ausgestaltungen können im Zusammenhang mit beliebigen an sich bekannten Ausgestaltungen von Tripodegelenken Einsatz finden, beispielsweise Tripodegelenke entsprechend der Druckschriften US 4 619 628 oder US 4 708 693.

Die im wesentlichen zylinderförmigen Wälzkörper 23 können eine in Längsrichtung der Mantelfläche leicht gekrümmte Kontur aufweisen, wodurch der Gleitanteil bei einer Bewegungskomponente in Richtung der Längsachse 31 der Wälzkörper 23 oder bei Drehbewegungen der Wälzkörper quer zur Längsachse 31 weiter verringert werden kann.

Weiterhin ist der Einsatz von Kegelrollen (mit einem geringen Kegelöffnungswinkel) als Wälzkörper 23 möglich, für welche die Verschwenkung weiter vereinfacht werden kann. Zur Gewährleistung einer translatorischen Verschiebung muß in diesem Fall ein weiterer Freiheitsgrad des Gelenkes vorgesehen sein.

Bei den beschriebenen Ausführungsformen handelt es sich nur um beispielhafte Ausgestaltungen. Weitere, insbesondere nicht beschriebene Merkmale der zur Erfindung gehörenden Vorrichtungsteile sind den in den Zeichnungen dargestellten Geometrien der Vorrichtungsteile zu entnehmen.

## Patentansprüche

1. Tripodegelenk zur Übertragung eines Antriebsmomenten zwischen zwei Antriebselementen eines Antriebsstranges mit einem Gelenkinnenteil (11) mit einem Tripodestern mit Zapfen (16) und einem das Gelenkinnenteil aufnehmenden Gelenkaußenteil (12), wobei
a) in den Kraftfluß zwischen Gelenkaußenteil (12) und Gelenkinnenteil (11) Wälzkörper (23) zwischengeschaltet sind,
b) die Wälzkörper (23) über eine zylinderförmige Mantelfläche verfügen und
c) das Gelenkaußenteil (12) und das Gelenkinnenteil (11) unter wälzender Bewegung der Wälzkörper (23) zueinander axial verschieblich und/oder verschwenkbar sind,
**dadurch gekennzeichnet, dass**
d) Längsachsen (31) von benachbarten Wälzkörpern (23) unter einem spitzen Winkel (38) zueinander orientiert sind.

2. Tripodegelenk nach Anspruch 1,
**dadurch gekennzeichnet, dass**
die Längsachsen (31) von mehreren Wälzkörpern über einen gemeinsamen Schnittpunkt (39) verfügen.

3. Tripodegelenk nach Anspruch 2,
**dadurch gekennzeichnet, dass**
der Schnittpunkt (39) im Bereich des Mittelpunktes (42) des Tripodesternes liegt.

4. Tripodegelenk nach einem der Ansprüche 1 bis 3,
**dadurch gekennzeichnet, dass**
mehrere Wälzkörper (23) in einem Käfig (24, 30) aufgenommen sind.

5. Tripodegelenk nach Anspruch 4,
**dadurch gekennzeichnet, dass**
Längsmitten (40) von Wälzkörpern (23) eines Käfigs (24, 30) auf einer Geraden (41) liegen.

6. Tripodegelenk nach Anspruch 4,
**dadurch gekennzeichnet, dass**
Längsmitten (40) von Wälzkörpern (23) eines Käfigs (24, 30) auf einer gekrümmten ebenen Kurve liegen.

7. Tripodegelenk nach Anspruch 6,
**dadurch gekennzeichnet, dass**
Längsmitten (40) von Wälzkörpern (23) eines Käfigs (24, 30) auf einem Kreisbogen oder einem Ellipsenausschnitt liegen.

## Claims

1. A tripod joint for the transmission of a drive torque between two drive elements in a drive train having an inner joint part (11) with a tripod start with bolt (16) and an outer joint part (12) to receive the inner joint part (11),
a) roller bearings (23) being inserted into the power flow between the outer joint part (12) and the inner joint part (11),
b) the roller bearings (23) having a cylindrical outer surface and
c) it being possible to axially displace and/or pivot the outer joint part (12) and the inner joint part (11) in relation to one another by rolling the roller bearings (23),
**characterised in that**
d) longitudinal axes (31) of adjacent roller bearings (23) are oriented at an acute angle to one another.

2. A tripod joint in accordance with claim 1,
**characterised in that**
the longitudinal axes (31) of several roller bearings (23) have a common point of intersection (39).

3. A tripod joint in accordance with claim 2,
**characterised in that**
the common point of intersection (39) lies in the area of the mid-point (42) of the tripod star.

4. A tripod joint in accordance with one of claims 1 to 3,
**characterised in that**
several roller bearings (23) are received in a cage (24, 30).

5. A tripod joint in accordance with claim 4,
**characterised in that**
longitudinal mid-points (40) of roller bearings (23) of a cage (24, 30) lie on a straight line (41).

6. A tripod joint in accordance with claim 4,
**characterised in that**
longitudinal mid-points (40) of roller bearings (23) of a cage (24, 30) lie on a flat curve (41).

7. A tripod joint in accordance with claim 6,
**characterised in that**
longitudinal mid-points (40) of roller bearings (23) of a cage (24, 30) lie on the arc of a circle or on an elliptical section.

## Revendications

1. Joint à tripode pour transmettre un couple d'entraînement entre deux éléments d'entraînement d'un train d'entraînement, comportant une partie intérieure de joint (11) présentant une étoile tripode avec des tenons (16), et une partie extérieure de joint (12) recevant la partie intérieure de joint, dans lequel
a) des corps de roulement (23) sont interposés dans le flux de force entre la partie extérieure de joint (12) et la partie intérieure de joint (11),
b) les corps de roulement (23) disposent d'une surface enveloppe cylindrique, et
c) la partie extérieure de joint (12) et la partie intérieure de joint (11) sont mobiles l'une par rapport à l'autre axialement en translation et/ou en pivotement sous un mouvement roulant les corps de roulement (23),
**caractérisé en ce que**
d) les axes longitudinaux (31) de corps de roulement voisins (23) sont orientés sous un angle aigu (38) l'un par rapport à l'autre.

2. Joint à tripode selon la revendication 1, **caractérisé en ce que** les axes longitudinaux (31) de plusieurs corps de roulement disposent d'un point d'intersection commun (39).

3. Joint à tripode selon la revendication 2, **caractérisé en ce que** le point d'intersection (39) se trouve dans la zone du centre (42) de l'étoile tripode.

4. Joint à tripode selon l'une des revendications 1 à 3, **caractérisé en ce que** plusieurs corps de roulement (23) sont reçus dans une cage (24, 30).

5. Joint à tripode selon la revendication 4, **caractérisé en ce que** des centres longitudinaux (40) des corps de roulement (23) d'une cage (24, 30) se trouvent sur une droite (41).

6. Joint à tripode selon la revendication 4, **caractérisé en ce que** des centres longitudinaux (40) des corps de roulement (23) d'une cage (24, 30) se trouvent sur une courbe plane recourbée.

7. Joint à tripode selon la revendication 6, **caractérisé en ce que** des centres longitudinaux (40) des corps de roulement (23) d'une cage (24, 30) se trouvent sur un arc de cercle ou sur un tronçon d'ellipse.
